# EUROPÄISCHE PATENTSCHRIFT

(11) **EP 1 112 206 B1**
(45) Veröffentlichungstag und Bekanntmachung des Hinweises auf die Patenterteilung: **25.09.2002**
(21) Anmeldenummer: 00940396.5
(22) Anmeldetag: 21.06.2000
(51) Int. Cl.: B61D 17/18

(54) **VERBINDUNGSELEMENT ZUR VERBINDUNG VON ZWEI BAUTEILEN**
JOINING ELEMENT FOR JOINING TWO PARTS
ELEMENT DE LIAISON PERMETTANT LA LIAISON DE DEUX COMPOSANTS

(30) Priorität: 15.07.1999 DE 19933097
(43) Veröffentlichungstag der Anmeldung: 04.07.2001
(73) Patentinhaber: Bombardier Transportation GmbH, 13627 Berlin (DE)
(72) Erfinder: LAUSZAT, Christian, D-16761 Hennigsdorf (DE); HOENIG, Thomas, D-16761 Hennigsdorf (DE); MARTENS, Holger, D-16540 Hohen Neuendorf (DE)
(74) Vertreter: Cohausz & Florack Patentanwälte
(86) Internationale Anmeldenummer: EP0005747
(87) Internationale Veröffentlichungsnummer: WO01005640

(56) Entgegenhaltungen:
- EP-A- 0 063 214
- EP-A- 0 622 286
- DE-A- 2 908 823
- FR-A- 2 337 798
- PATENT ABSTRACTS OF JAPAN vol. 1997, no. 10, 31. Oktober 1997 (1997-10-31) & JP 09 150738 A (NIPPON SHARYO SEIZO KAISHA LTD), 10. Juni 1997 (1997-06-10)

## Beschreibung

Die Erfindung betrifft ein Verbindungselement gemäß dem Oberbegriff des ersten Anspruchs.

Ein bekanntes Verbindungselement zur Abstützung von Fußbodenplatten auf der Bodenwand eines Schienenfahrzeugs (EP 0063214 A1) weist eine Profilleiste auf, die zwei hochgesetzte voneinander weggerichtete Eingriffstege besitzt. Diese Eingiffsstege greifen in Aufnahmenuten eines gummielastischen Stützteils ein. Die Aufnahmenuten sind dabei von der offenen Seite des Stützteils aus zugänglich. Das Stützteil seinerseits ist mit cer der Profilleiste abgewandten Seite ganzflächig verklebt. Ein so aufgebautes Verbindungselement ist nur für die Aufnahme von Druckbelastungen geeignet, die von einem zu anderen damit zu verbindenden Bauelementen gerichtet sind, wie sie bei der Auflagerung von Fußbodenplatten auf einer darunter befindlichen Bodenwand auftreten.

Ein weiteres Verbindungselement ist aus der Druckschrift EP 0 622 286 A bekannt.

Der Erfindung liegt die Aufgabe zugrunde, ein Verbindungselement zu schaffen, das einfach im Aufbau ist sowie für Zug- und für Druckbelastung zumindest annähernd gleiche Eigenschaften aufweist und auch bei Zugbelastung einen sicheren Zusammenhalt gewährleistet.

Die Lösung dieser Aufgabe erfolgt gemäß der Erfindung durch die kennzeichnenden Merkmale des ersten Anspruchs. Andere vorteilhafte Weiterbildungen sind in zusätzlichen Ansprüchen angegeben.

Durch die Ausgestaltung des Verbindungselements gemäß der Erfindung wird ein symmetrischer Aufbau für die Aufnahme von Druckkräften sowie von Zugkräften erreicht, nachdem das gummielastische Stützelement in Bezug auf die Eingriffstege für auftretende Zug- oder Druckkräfte in gleicher Weise zwischen den Innenflanken der profilierten Halteschiene gelagert ist. Dabei verhindert der Spalt zwischen dem Stützelement und dem die Endstücke verbindenden Grundsteg eine Pressung des Stützelements außerhalb der für die Abstützung bestimmten Flanken der Endstücke. Durch die Wahl der Spalthöhe kann dabei bestimmt werden, bis zu welchen Druckkräften die an den Innenflanken der Endstücke abgestützten Teile des Stützelements allein für die Kraftaufnahme genutzt werden. Da der Außenabstand der freien Enden der Eingriffstege größer gewählt ist, als der lichte Abstand zwischen den freien Endkanten der Endstücke, ist sichergestellt, daß die Profilschiene nicht unter Aufklappen der Aufnahmenuten außer Eingriff mit dem Stützteil gelangen kann, da die Endkanten in senkrechter Projektion sowohl das Stützteil als auch die freien Enden der Eingriffstege überdecken.

Die Halteschiene für das Stützelement ist vorzugsweise einstückig mit einem der Bauteile verbunden und insbesondere als Strangpreßprofil zusammen mit dem Bauteil, vorzugsweise mit einer Wagenkastenwandung für Fahrzeuge zur Personenbeföderung hergestellt. Dadurch entfällt zusätzlicher Herstell- und Montageaufwand für die Einzelanfertigung der Halteschiene. Damit die symmetrischen Wirkeigenschaften des Verbindungselements für Druck- und Zugkräfte sichergestellt ist, sind die Endstücke der Halteschiene vorzugsweise dachförmig ausgebildet, wobei die Innenflanken gegenüber der die Eingriffsstege aufnehmende Ebene gegengleich und vorzugsweise jeweils um 45° geneigt sind. Es entstehen somit parallel zu den Flanken Schubbeanspruchungen innerhalb des aus Gummi oder gummiähnlichem Material bestehenden Stützteils und es werden dadurch neben den Federungseigenschaften auch die günstigen geräuschdämmenden Eigenschaften des Stützteils ausgenutzt. Dabei verhindert auch der Spalt zwischen dem Grundsteg der Halteschiene und dem Stützelement die großflächige Übertragung von geräuscherzeugenden Schwingungen. Dadurch ist ein geringer Körperschalleintrag in den Innenraum des Wagenkastens eines Fahrzeugs gegeben. Das so ausgebildete Verbindungselement ist daher insbesondere für die Verwendung als Verbindungselement sowohl für Innenausbauteile, wie Decken- und Seitenwandverkleidungen als auch für Bodenplatten mit Vorteil geeignet.

Während sich die Halteschiene vorzugsweise über die gesamte Länge eines Wandungsmoduls oder einer gesamten Wagenkastenwand erstreckt, wird ein Stützteil in der Regel nur punktuell an mehreren Stellen der Halteschiene eingesetzt. Auch die Profilschiene kann dabei auf die Länge des Stützteils beschränkt werden, gegebenenfalls aber auch von einem bis zu wenigstens einem weiteren Stützteil reichen. Zudem kann in einen die Eingriffstege verbindenden Tragesteg der Profilleiste zumindest eine, vorzugsweise zwei Haltenuten eingeformt werden, in welchen Toleranzausgleichstücke unterschiedlicher Dicke mit einem Haltesteg kraft- oder formschlüßig eingesetzt werden. Dadurch können Abstandsschwankungen zwischen den miteinander zu verbindenden Bauteilen ausgeglichen werden. Es ist jedoch auch möglich, alternativ oder zusätzlich Profilleisten zu verwenden, bei welchem der Tragsteg je nach gefordertem Abstand zwischen den Bauteilen eine unterschiedliche Höhe zwischen dem Tragesteg und den Eingriffstegen aufweist.

Die Erfindung ist nachfolgend anhand der Skizzen eines Ausführungsbeispiels näher erläutert.
Es zeigen:
- Fig.1: einen teilweise dargestellten Wagenkasten für ein Schienenfahrzeug in einer prinzipiellen Querschnittsdarstellung mit daran angeordneten Verbindungselementen,
- Fig.2: ein Verbindungselement zur Anordnung an einer Deckenwand,
- Fig. 3: ein Verbindungselement zur Anordnung an einer aufrechten Seitenwand,
- Fig. 4: ein Verbindungselement zur Anordnung auf einer Bodenwand und
- Fig. 5: eine vergrößerte Einzelheit des Verbindungselements im Wirkungsbereich eines elastischen Stützteils zwischen einer Profilschiene und einer Halteschiene.

Um beispielsweise bei einem Wagenkasten für ein Schienenfahrzeug ein Bauteil 1, beispielsweise eine Dachwand 11, eine Seitenwand 12, eine Bodenwand 13 mit einem weiteren Bauteil 2, beispielsweise mit einer Deckenverkleidung 21, einer Seitenwandverkleidung 22, einem Fußboden 23 zu versehen, sind zwischen den beiden Bauteilen 1 und 2 an verschiedenen Stellen Verbindungselemente 3 zugeordnet. Diese Verbindungselemente 3 werden im Bereich der Dachwand 11 mit Zugkräften im Bereich der Seitenwand 12 mit Kippmoment im Bereich der Bodenwand 13 mit Druckkräften beaufschlagt. Die Verbindungselemente 3 sind dabei alle in gleicher Weise ausgebildet und weisen auch gleiche Eigenschaften auf.

Das jeweilige Verbindungselement 3 weist eine Halteschiene 4, 5 auf, wobei ein Grundsteg 4 zwei voneinander beabstandete Endstücke 5 trägt. Die Halteschiene 4, 5 ist im Querschnitt C-förmig ausgebildet, wobei die beiden vorliegenden dachförmig ausgebildeten Endstücke 5 mit ihren offenen Seiten bzw. ihren beiden Innenflächen 51 und 52 gegenüber stehen und zusammen mit dem Grundsteg 4 das endseitige C-förmige Profil bilden.

Die Halteschiene 4, 5 ist vorliegend einstückig mit der jeweiligen Wand des Bauteils 1 verbunden. Sie kann jedoch auch als Einzelteil für sich hergestellt werden und mit der betreffenden Wand verbunden werden.

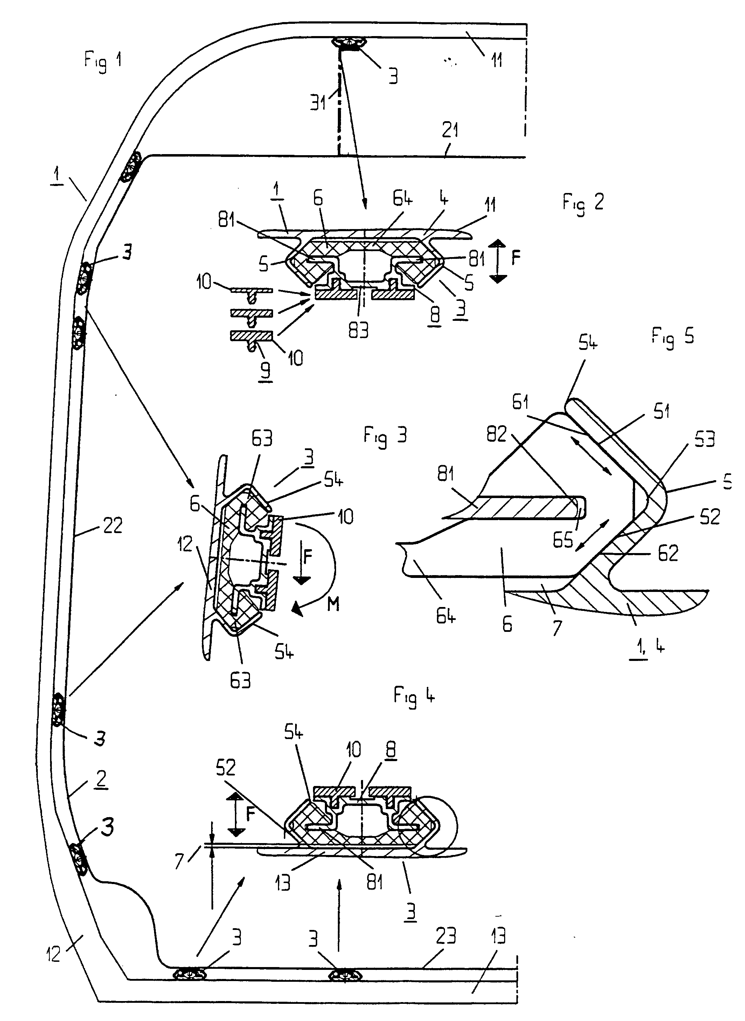

Zwischen die beiden sich gegenüberstehenden Endstücke 5 ist ein gummielastisches Stützteil 6 formschlüssig eingefügt, wobei daran Gegenflanken 61 und 62 ausgebildet sind, die sich plan an die Innenflanken 51 und 52 anlegen. Die Gegenflanken 61 und 62 sind an gegenüberliegenden Randabschnitten 63 des Stützteils 6 ausgebildet. Die beiden Randabschnitte 63 bzw. Gegenflanken 62 sind durch ein Bodenteil 64 miteinander verbunden, das benachbart zum Grundsteg 4 verläuft. Zwischen dem Grundsteg 4 und dem Bodenteil 64 befindet sich dabei ein Spalt 7, der in Figur 4 durch nach außen gezogene Maßlinien verdeutlicht dargestellt ist. Das Stützteil 6 bildet somit ebenfalls einen C-förmigen Querschnitt, der dem Querschnitt der Halteschiene 4, 5 angepaßt ist, wobei das Stützteil 6 nur über die Gegenflanken 61 und 62 mit den Innenflanken 51 und 52 der Halteschiene 4, 5 in Verbindung steht. Das Stützteil 6 befindet sich dabei innerhalb der Querschnittsfläche der Halteschiene 4, 5. Im Stützteil 6 befinden sich Aufnahmenuten, die etwa in der Ebene liegen, welche die Scheitelpunkte 53 zwischen den Innenflanken 51, 52 aufnimmt. Diese Aufnahmenuten 65 liegen mit Abstand von dem Bodenteil 64 und sind an ihren einander zugewandten Enden offen, und zum Scheitelpunkt 53 hin geschlossen. Gegenüber der die Aufnahmenuten 65 aufnehmenden Ebene sind die Innenflanken 51, 52 gegengleich geneigt; sie stehen insbesondere unter einem Winkel von 45 Grad zu dieser Ebene, so daß die Innenflanken 51, 52 unter dem doppelten Winkel, vorliegend unter 90 Grad zueinander stehen.

Das Verbindungselement 3 weist zudem eine Profilschiene 8 auf, die von der.offener. Seite der Halteschiene 4, 5 bzw. dem Stützteil 6 zwischen den Gegenflanken 61 in das Stützteil 6 hineinragt und mit zwei voneinander weg gerichteten Eingriffstegen 81 ebenengleicn in die Aufnahmenuten 65 eingreift. Dabei ist der lichte Abstand zwischen den freien Endkanten 54 der Endstücke 5 kleiner als der Außenabstand zwischen den freien Enden 82 der Eingriffstege 81 ist. In senkrechter Projektion liegen somit die freien Enden 82 der Eingriffstege 81 im Überdeckungsbereich mit den Gegenflanken 61, 62 und mit den Innenflanken 51, 52 der Halteschiene 4, 5. Die Profilleiste 8 ist dabei für das Zusammenwirken mit dem zweiten Bauteil 2 ausgebildet.

Zwischen der Bodenwand 13 und dem Fußboden 23 treten in der Regel hauptsächlich Druckkräfte auf, die von den dort angeordneten Verbindungselementen 3 aufzunehmen sind. Dabei liegt der Fußboden 23 auf der Profilleiste 8 bzw. daran angesteckten Ausgleichsleisten 9 auf. Die Eingriffstege 81 bewirken dadurch eine Pressung des gummielastischen Stützteils 6, 62 im Bereich der Innenflanken 52 der Halteschiene 4, 5. Die dabei auftretenden Kräfte werden allein über die Gegenflanken 62 auf die Innenflanken 52 übertragen, wobei in dem Randabschnitt 63 des Stützteils 6 parallel zu den Flanken 52 und 62 gerichtete Kraftkomponenten im Stützteil 6 auftreten. Es ergibt sich hierdurch nicht nur eine gute Federwirkung, sondern vielmehr auch eine optimale Schwingungsdämpfung, so daß vom Fahrgestell auf die Bodenwand übertragene Schwingungen nur stark gedämpft auf den Fußboden 23 übertragen werden.

Im Bereich der Deckenwand 11 angeordnete Verbindungselemente 3 werden durch eine daran angehängte Deckenverkleidung 21 hauptsächlich mit Zugkräften beaufschlagt. Das in Figur 2 dargestellte Verbindungselement 3 ist dabei bei gleicher Ausgestaltung nur kopfüber gegenüber den Verbindungselementen 3 im Bereich der Bodenwand 13 angeordnet. Da auch hier die freien Enden 82 der Eingriffstege 81 jeweils im Überdeckungsbereich mit den Innenflanken 51 liegen, werden die von der Deckenverkleidung ausgeübten Zugkräfte über die Gegenflanken 61 auf die betreffende Innenflanke 51 übertragen. Auch hierbei erfolgt die durch einen Doppelpfeil angedeutete Beanspruchung des Stützelements 6 im Bereich des betreffenden Randabschnitts 63 mit den optimalen Federungs- und Schwingungsdämpfungseigenschaften des Stützelements 6. Zug- oder Druckkräfte werden demnach im so aufgebauten Verbindungselement in gleicher Weise aufgenommen und Schwingungen gleichwertig gedämpft.

Die Endstücke 5 verlaufen jeweils parallel zueinander und sind insbesondere als durchgehende Profilanformungen an metallischen extrudierten oder in Kunststoff-Form-Verfahren hergestellten Wänden ausgebildet. Die Länge der Endstücke ist dabei vorzugsweise größer als die Länge des eingesetzten Stützteils 6, von welchen eine Mehrzahl mit Abstand voneinander in einer der Halteschienen 4, 5 angeordnet werden können. Es können dann großflächige Bauteile wie Verkleidungsplatten daran festgesetzt werden, es können jedoch auch einzelne Anbauteile daran befestigt werden. Auch die Profilleiste 8 ist in der Regel kürzer als die Halteschiene 4, 5 und kann entsprechend der Länge des Stützelements 6 bemessen sein. Es ist jedoch auch möglich, die Profilleiste 8 in einer Länge auszubilden, die einen Eingriff mit mehreren der Stützelemente 6 ermöglicht. Es kann dann daran eine Verkleidungsplatte an mehreren Punkten festgeschraubt werden, während eine Verbindung zu Außenwandungen des Wagenkastens nur an wenigen Stellen über eingefügte Stützteile 6 erfolgt. Hierdurch wird insbesondere die Übertragung von Schwingungen auf ein Minimum reduziert.

Gemäß Figur 3 werden auch Seitenwandverkleidungen 22 an aufrechte äußere Seitenwände 12 mittels der Verbindungselemente 3 angebunden. Die Verbindungselemente 3 sind auch hier mit den übrigen Verbindungselemente baugleich und werden vorliegend außer durch eine mit einem nach unten gerichteten Pfeil bezeichnete Gewichtskraft auch von einem durch einen Bogenpfeil gekennzeichnetes Drehmoment beaufschlagt. Bei dieser Anordnung wird der untere Randabschnitt 63 des Stützteils 6 mit Druckkräften analog der Anordnung gemäß Figur 4 und am oberen Randabschnitt 63 mit Zugkräften analog der Anordnung nach Figur 2 beaufschlagt. Da die Zuordnung der Innenflanken 51 und der Gegenflanken 61 im Aufbau und in der Wirkung gleich der Zuordnung der Innenflanken 52 zu den Gegenflanken 62 und insgesamt zu den Eingriffstegen 81 ist, wird unabhängig von dem Auftreten von Zug- oder Druckkräften jeweils die gleiche Feder- und Dämpfungseigenschaft im Bereich der Eingriffstege 81 erzielt. Beim Auftreten von Druckkräften verhindert dabei zumindest bis zu einem Grenzdruckwert der Spalt 7 eine Änderung der vorbeschriebenen Eigenschaften des betreffenden Verbindungselements 3.

Um Maßtoleranzen im Abstand zwischen den Bauteilen 1 und 2 ausgleichen zu können, sind in den Rücken der Profilleiste vorliegend zwei parallel zueinander verlaufenden Nuten eingearbeitet, in welche Haltestege 9 an Ausgleichsstücken 10 eingreifen. Die Ausgleichsstücke 10 können dabei unterschiedliche Materialstärke aufweisen, die nach vorhandener Maßabweichung kraftschlüssig eingesetzt werden können. Die Haltenuten sind dabei vorzugsweise in einen die Eingriffstege 81 verbindenden Tragsteg 83 der Profilleiste 8 eingeformt und verlaufen senkrecht zur Querschnittsfläche der Halteschiene 4, 5. Zur Anpassung an unterschiedliche Abstände zwischen den Bauteilen 1 und 2 kann auch vorgesehen werden, Profilleisten 8 zu verwenden, bei welchen der Tragsteg 83 in einem unterschiedlichen Abstand gegenüber den zugehörigen Eingriffstegen 81 angeordnet ist. Das kann insbesondere bei abgehängten Deckenverkleidungen 21 angewandt werden, um zwischen der Dachwand 11 und der Deckenverkleidung 21 befindliche weitere Bauteile 31 durch eine entsprechend beabstandete Verkleidung 21 abzudecken.

Es ergibt sich somit insgesamt eine Vereinfachung der Montage von Innenausbauteilen bei Wagenkästen für Fahrzeuge zur Personenbeförderung, wobei zur Befestigung von Seitenwandverkleidungen, Deckenverkleidungen und Fußböden jeweils ein einheitlich ausgebildetes Verbindungselement eingesetzt werden kann. Es wird dadurch die Teilevielfalt im Montageprozeß gesenkt und die Lagerhaltung vereinfacht sowie eine beachtliche Zeitersparnis bei der Herstellung, Bereitstellung und Montage erzielt. Dabei sind die Federungseigenschaften und Körperschalldämpfung in allen Anwendungsfällen optimal und es kommt zu einer Komfortverbesserung im Hinblick auf Innengeräusche. Es wird somit ein einheitliches Befestigungskonzept für den gesamten Innenausbau bereitgestellt, wobei eine minimale Anzahl von Bauelementen am jeweiligen Verbindungselement zum Einsatz kommt, das zudem einen Toleranzausgleich in zwei Richtungen und auch die Anpassung an unterschiedliche Bauhöhen ermöglicht.

## Patentansprüche

1. Verbindungselement (3) zur Verbindung von zwei Bauteilen (1, 2), insbesondere zwischen einer Wand und einem Ausbauteil eines Wagenkastens, mit einem gummielastischen Stützteil (6), das eine C-förmige Querschnittsform und darin von seiner offenen Seite aus zugängliche nach außen gerichtete Aufnahmenuten (65) aufweist, sowie mit einer Profilleiste (8) mit zwei von einander weggerichteten Eingriffstegen (81), welche in die Aufnahmenuten (65) des Stützteils (6) eingreifen, wobei das Stützteil (6) mit einem der Bauteile und die Profilleiste mit dem anderen Bauteil (2) verbindbar ist, **dadurch gekennzeichnet,**
**daß** eine C-förmige Halteschiene (4, 5) mit zwei an einen Grundsteg (4) angeformten dachoder bogenförmigen Endstücken (5) vorgesehen ist, die sich mit ihren hohlen Innenflächen (51, 52) gegenüberstehen,
**daß** das Stützteil (6) innerhalb der Querschnittfläche der Halteschiene (4, 5) jeweils an den beiden Innenflanken (51, 52) der Endstücke (5) anliegt,
**daß** die Aufnahmenuten (65) und die Eingriffstege (81) zu den Endstücken (5) weisen,
**daß** zwischen dem Stützteil (6) und dem Grundsteg (4) der Halteschiene (4, 5) ein Spalt (7) gebildet ist,
**daß** die Eingriffstege (81) von der offenen Seite der Halteschiene (4, 5) aus in das Stützteil (6) eingreifen und
**daß** der lichte Abstand zwischen den freien Endkanten (54) der Endstücke (5) kleiner als der Außenabstand zwischen den freien Enden (82) der Eingriffstege (81) ist.

2. Verbindungselement nach Anspruch 1, **dadurch gekennzeichnet,**
**daß** die Innenflanken (51, 52) jedes Endstück (5) gegenüber der die Eingriffstege (81) aufnehmenden Ebene gegengleich geneigt sind.

3. Verbindungselement nach wenigstens einem der Ansprüche 1 oder 2, **dadurch gekennzeichnet,**
**daß** die Endstücke (5) parallel zueinander verlaufen und eine größere Länge als die Profilleiste (8) und/oder das Stützelement (6) aufweisen.

4. Verbindungselement nach wenigstens einem der Ansprüche 1 bis 3, **dadurch gekennzeichnet,**
**daß** in einen die Eingriffstege (81) verbindenden Tragsteg (83) der Profilleiste (8) zumindest eine Haltenut eingeformt ist, die senkrecht zur Querschnittsfläche der Halteschiene (4, 5) verläuft.

5. Verbindungselement nach Anspruch 4, **dadurch gekennzeichnet,**
**daß** der Tragsteg (83) an unterschiedlichen Profilleisten (8) unterschiedlich gegenüber den zugeorndneten Eingriffstegen (81) beabstandet ist.

6. Bauteil (1) mit einem Verbindungselement nach einem der Ansprüche 1 bis 5, **dadurch gekennzeichnet,**
**daß** die Halteschiene (4, 5) einstückig mit einem Bauteil (1) verbunden ist.

7. Verwendung eines Verbindungselements nach wenigstens einem der Ansprüche 1 bis 5 oder eines Bauteils nach Anspruch 6 zur Verbindung von Decken- und/oder Seiten- und/oder Bodenwänden (11, 12, 13) mit Anbauteilen (21, 22, 23) in Wagenkästen.

## Claims

1. Connection element (3) for connecting two components (1, 2), in particular between a wall and a fitting of a vehicle body, with a rubber-elastic support element (6) having a C-shaped cross-sectional form containing locating slots (65) directed outwards and accessible from its open side, also with a profile rail (8) with two engaging webs (81) directed away from one another, which engage in the locating slots (65) of the support element (6), wherein the support element (6) is connectable to one of the components and the profile rail to the other component (2), **characterized in that**
- there is provided a C-shaped retaining rail (4, 5) with two roofs-shaped or curved end pieces (5) formed on a base web (4) with their hollow inner faces (51, 52) opposite one another,
- the support element (6) lies within the cross-sectional area of the retaining rail (4, 5), in each case in contact with the two inner faces (51, 52) of the end pieces (5),
- the locating slots (65) and engaging webs (81) point towards the end pieces,
- a gap (7) is formed between the support element (6) and the base web (4) of the retaining rail (4, 5),
- the engaging webs (81) engage in the support element (6) from the open side of the retaining rail (4, 5) and
- the clearance between the free end edges (54) of the end pieces (5) is less than the outside distance between the free ends (82) of the engaging webs (81).

2. Connection element according to claim 1, **characterized in that** the inner faces (51, 52) of each end piece (5) are inclined, diametrically opposed, relative to the plane of the engaging webs (81).

3. Connection element according to at least one of claims 1 or 2, **characterized in that** the end pieces (5) run parallel to one another and are of greater length than the profile rail (8) and/or the support element (6).

4. Connection element according to at least one of claims 1 to 3, **characterized in that** one or more retaining slots running at right-angles to the cross-sectional surface of the retaining rail (4, 5) are formed in a support web (83) of the profile rail (8) which connects the engaging webs (81).

5. Connection element according to claim 4, **characterized in that** on different profile rails (8) the support web (83) is spaced differently relative to the assigned engaging webs (81).

6. Component (1) with a connection element according to one of claims 1 to 5, **characterized in that** the retaining rail (4, 5) is integrally connected to a component (1).

7. Use of a connection element according to at least one of claims 1 to 5 or of a component according to claim 6 to connect roofs and/or side walls and/or bases (11, 12, 13) to fittings (21, 22, 23) in vehicle bodies.

## Revendications

1. Elément de liaison (3) servant à relier deux éléments de construction (1, 2), notamment sur une paroi et une partie de montage d'une caisse de voiture, comportant un élément d'appui (6) présentant l'élasticité du caoutchouc, qui possède une forme en C en coupe transversale et qui comporte des rainures de logement (65) dirigées vers l'extérieur et accessibles à partir d'un côté ouvert, ainsi qu'une barrette profilée (8) comportant deux barrettes d'engrènement (81) tournées à l'opposé l'une de l'autre et qui s'engagent dans les rainures de logement (65) de l'élément d'appui (6), l'élément d'appui (6) pouvant être relié à l'un des éléments de construction et la barrette profilée pouvant être reliée à l'autre élément de construction (2), **caractérisé en ce**
**qu'**il est prévu un rail de retenue en forme de C (4, 5) comportant deux éléments d'extrémité (5) en forme de toit ou de coude, formés sur une barrette de base (4) et qui sont situés en vis-à-vis avec leurs surfaces intérieures creuses (51, 52),
**que** l'élément d'appui (6) s'applique, à l'intérieur de la surface en coupe transversale des rails de retenue (4, 5) respectivement contre les deux flancs intérieurs (51, 52) des éléments d'extrémité (5),
**que** les rainures de logement (65) et les barrettes d'engrènement (81) sont tournées vers les éléments d'extrémité (5),
**qu'**une fente (7) est formée entre l'élément d'appui (6) et la barrette de base (4) des rails de retenue (4, 5),
**que** les barrettes d'engrènement (81) s'engagent, à partir du côté ouvert des rails de guidage (4, 5), dans l'élément d'appui (6), et
**que** la distance entre les bords d'extrémité libres (54) des éléments d'extrémité (5) est inférieure à la distance extérieure entre les extrémités libres (82) des barrettes d'engrènement (81).

2. Elément de liaison selon la revendication 1, **caractérisé en ce que** les flancs intérieurs (51, 52) de chaque élément d'extrémité (5) sont inclinés de la même manière par rapport au plan dans lequel sont disposées les barrettes d'engrènement (81).

3. Elément de liaison selon au moins l'une des revendications 1 ou 2, **caractérisé en ce que** les éléments d'extrémité (5) sont parallèles entre eux et possèdent une longueur supérieure à celle de la barrette profilée (8) et/ou de l'élément d'appui (6).

4. Elément de liaison selon au moins l'une des revendications 1 à 3, **caractérisé en ce que** dans une réglette de support (83), qui relie les barrettes d'engrènement (81), de la barrette profilée (8) est formée au moins une rainure de retenue, qui s'étend perpendiculairement à la surface transversale des rails de retenue (4, 5).

5. Elément de liaison selon la revendication 4, **caractérisé en ce que** la réglette de support (83) est située sur des barrettes profilées différentes (8), à des distances différentes des barrettes d'engrènement associées (81).

6. Pièce de construction (1) comportant un élément de liaison selon l'une des revendications 1 à 5, **caractérisé en ce que** les rails de retenue (4, 5) sont reliés d'un seul tenant à une pièce de construction (1).

7. Utilisation d'un élément de liaison selon l'une des revendications 1 à 5 ou d'une pièce de construction selon la revendication 6, pour relier des parois de plafond et/ou des parois latérales et/ou des parois de plancher (11, 12, 13) à des éléments rapportés (21, 22, 23) dans des caisses de voiture.
